# EUROPEAN PATENT SPECIFICATION

(11) **EP 1 085 349 B1**
(45) Date of publication and mention of the grant of the patent: **28.06.2006**
(21) Application number: 00119410.9
(22) Date of filing: 12.09.2000
(51) Int. Cl.: G02B 1/04

(54) **Plastic lenses having good ultraviolet absorbability, and method for the production thereof**
UV-absorbierende Kunststofflinse und Verfahren zur Herstellung
Lentilles en matière plastique absorbant la lumière ultraviolette et procédé de leur fabrication

(30) Priority: 20.09.1999 JP 26532199
(43) Date of publication of application: 21.03.2001
(73) Proprietor: HOYA CORPORATION, Shinjuku-ku, Tokyo 161-8525 (JP)
(72) Inventor: Kosaka, Masahisa, Shinjyu-ku, Tokyo 161-8525 (JP); Itoh, Shinsuke, Shinjyu-ku, Tokyo 161-8525 (JP)
(74) Representative: HOFFMANN EITLE

(56) References cited:
- WO-A-93/06160
- US-A- 3 309 220
- US-A- 4 872 877
- PATENT ABSTRACTS OF JAPAN vol. 1998, no. 12, 31 October 1998 (1998-10-31) & JP 10 186291 A (TORAY IND INC), 14 July 1998 (1998-07-14) & DATABASE WPI/DERWENT [Online] aN 1998-443086,
- PATENT ABSTRACTS OF JAPAN vol. 017, no. 458 (C-1100), 20 August 1993 (1993-08-20) & JP 05 105772 A (TORAY IND INC), 27 April 1993 (1993-04-27) & DATABASE WPI/DERWENT [Online] AN 1993-172707,
- PATENT ABSTRACTS OF JAPAN vol. 1997, no. 10, 31 October 1997 (1997-10-31) & JP 09 145901 A (ASAHI OPTICAL CO LTD), 6 June 1997 (1997-06-06) & DATABASE WPI/DERWENT [Online] AN 1997-354382,
- PATENT ABSTRACTS OF JAPAN vol. 1999, no. 05, 31 May 1999 (1999-05-31) & JP 11 052101 A (SEIKO EPSON CORP), 26 February 1999 (1999-02-26)

## Description

### Technical Field

The present invention relates to plastic lenses having good UV absorbability, especially for spectacles, and to a method for the production thereof. More precisely, the invention relates to plastic lenses which absorb long-wave UV radiation in the wavelength region of around 400 nm and have a reduced yellow coloring, and to a method for the production thereof.

### Background of the Invention

UV-light is electromagnetic radiation of about 200-400 nm wavelength, and is said to have some negative influences on human bodies. In the field of lenses for spectacles, there is increasing a demand for UV-absorbing lenses for protecting human eyes from UV-light.

Various methods are known for producing UV-absorbing plastic lenses for e.g. spectacles. The first method comprises incorporating a UV absorbent such as 2, 2'-dihydroxy-4-methoxybenzophenone, 2,2'-dihydroxy-4-n-octoxybenzophenone or the like to a plastic lens monomer followed by polymerizing the monomer to give plastic lenses, as disclosed in Japanese Patent Laid-Open Nos. 50049/1975, 122501/1983, 171716/1990, 93422/1990 and 254119/1987.

A second method concerns the coloring of plastic lenses, comprising dipping plastic lenses in an aqueous solution with a UV absorbent dispersed therein at a temperature of 80-100°C, thereby infiltrating the UV-absorbent into the plastic lenses (Japanese Patent Laid-Open No. 230003/1989).

A third method comprises applying a substance capable of absorbing and/or scattering UV-light onto plastic lenses Japanese Patent Laid-Open No. 265059/1997).

It is presumed that the majority of conventional commercially-available plastic lenses for spectacles capable of absorbing UV-light of up to 400 nm will be produced according to the second method.

### Problems to be solved by the Invention

The first method disclosed in Japanese Patent Laid-Open Nos. 171716/1990, 93422/1990 and 254119/1987 is for improving the lightfastness of plastic lenses. If lenses capable of absorbing UV-light of up to about 400 nm are produced according to the first method using conventional UV-absorbents such as 2,2'-dihydroxy-4-methoxybenzophenone, 2,2'-dihydroxy-4-n-octoxybenzophenone, etc., and especially if diethylene glycol bisallylcarbonate which is one typical material for plastic lenses for spectacles is used, some problems are inevitable. One problem is that the produced plastic lenses often have an extremely yellow coloring thus having a poor appearance; and another is that a large amount of the UV-absorbent is used, thus having some negative influences on the polymerization reaction, and the physical properties of the plastic lenses produced are often poor.

The second method is also problematic in that the UV-absorbent to be used therein must have a high degree of UV-absorbability and a suitable degree of solubility in water, and that the plastic lenses produced do not have a satisfactory degree of UV-absorbability, or if they have it, the dipping time during the production is prolonged and the obtained plastic lenses are often yellowish. In place of using water as in the second method, another method has been proposed wherein an organic solvent is used. However, this is still problematic in that the plastic lenses produced therein often have an extremely yellow coloring.

The thirdmethod is also not suitable for obtaining plastic lenses capable of absorbing UV-light of up to about 400 nm.

The object of the present invention is to solve the problems noted above and to provide a method for producing plastic lenses, especially for spectacles, wherein plastic lenses are produced having an improved ability to absorb UV-light of up to about 400 nm which are less yellowish than conventional plastic lenses for spectacles, and wherein the amount of the UV-absorbent added to the lenses is reduced.

### Means for Solving the Problems

The present inventors have assiduously studied so as to attain the above object, and have found that, if a specific UV-absorbent is infiltrated into specific plastic lenses, the resulting lenses have an excellent ability to absorb UV rays of up to about 400 nm and are not too much yellowish. On the basis of this finding the present invention was obtained.

Specifically, the invention provides a method for producing plastic lenses of good UV absorbability, especially for spectacles, which comprises dipping poly(thio)urethane lenses or lenses of a diethylene glycol bisallylcarbonate-type polymer in a solution comprising at least one compound selected from dibenzoylmethane compounds of the general formula (1) 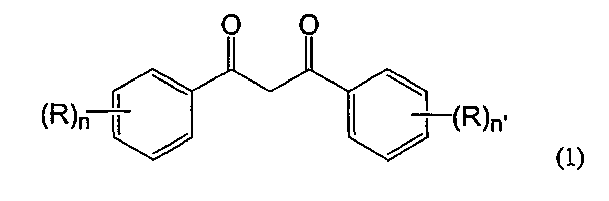 wherein R and R' each represent a linear or branched C₁₋₈-alkyl group, or a linear or branched C₁₋₈-alkoxyl group; and n and n' independently are 0 or an integer of 1-3; and benzotriazole compounds of the general formula (2) 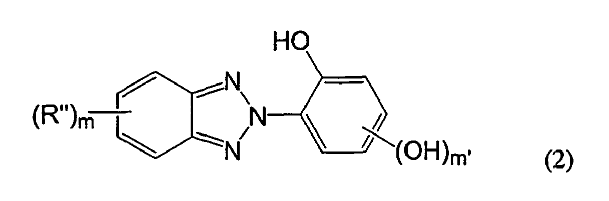 wherein R'' represents a hydrogen atom, a chlorine atom or a bromine atom; and m and m' each indicate 1 or 2.

### Brief Description of the Drawings

[Fig. 1] is a graph showing the spectral transmittance curves of the lenses of Examples 1 to 6.
[Fig. 2] is a graph showing the spectral transmittance curves of the lenses of Comparative Examples 1 to 4.

### Modes of Carrying out the Invention

The UV-absorbent to be used in the invention is a dibenzoylmethane compound of formula (1) or a benzotriazole compound of formula (2). The compounds of formula (1) are known substances, as described in, for example, Japanese Patent Laid-Open No. 46056/1977; and the compounds of formula (2) are also known compounds. However, heretofore it was unknown that these compounds are usable as a UV-absorbent for plastic lenses, and that plastic lenses containing them can absorb UV-light of up to about 400 nm and have a reduced yellow coloring as compared with conventional plastic lenses.

In formula (1), R and R' each represent a linear or branched C₁₋₈-alkyl or C₁₋₈-alkoxyl. The linear or branched C₁₋₈-alkyl group includes methyl, ethyl, n-propyl, isopropyl, n-butyl, isobutyl, sec-butyl, tert-butyl, pentyl (including all isomers, such as n-pentyl, isopentyl, etc. -the same applies to all groups of isomers referred to herein), hexyl, heptyl, and octyl. The same applies to the alkyl moiety of the linear or branched C₁₋₈-alkoxyl group. Preferably, the alkyl (or alkoxyl) group has 1-4 carbon atoms. Also preferably, n and n' each are 0 or 1.

Specific examples of the compounds of formula (1) are as follows (wherein "DBM" means dibenzoylmethane):
DBM, 2-methyl-DBM, 4-methyl-DBM, 4-isopropyl-DBM,
2,4-dimethyl-DBM, 2,5-dimethyl-DBM, 4,4'-diisopropyl-DBM,
2-ethyl-DBM, 4-ethyl-DBM, 2-propyl-DBM, 4-propyld-DBM,
2-isopropyl-DBM, 4-isopropyl-DBM, 2-butyl-DBM, 4-butyl-DBM,
4-tert-butyl-DBM, 2,4-dimethyl-DBM, 2,5-dimethyl-DBM,
2,4-diethyl-DBM, 2,5-diethyl-DBM, 4,4'-dimethyl-DBM,
4,4'-diethyl-DBM, 4,4'-dipropyl-DBM, 4,4'-diisopropyl-DBM,
4,4'-dibutyl-DBM, 4,4'-di-tert-butyl-DBM,
4-methyl-4'-ethyl-DBM, 2-methoxy-DBM, 4-methoxy-DBM,
2-ethoxy-DBM, 4-ethoxy-DBM, 2-propoxy-DBM, 4-propoxy-DBM,
2-butoxy-DBM, 4-butoxy-DBM, 4,4'-dimethoxy-DBM,
4,4'-diethoxy-DBM, 4,4'-dipropoxy-DBM, 4,4'-diisopropoxy-DBM,
4,4'-dibutoxy-DBM, 4-methyl-4'-methoxy-DBM,
4-methyl-4'-ethoxy-DBM, 4-methyl-4'-propoxy-DBM,
4-methyl-4'-butoxy-DBM, 4-ethyl-4'-methoxy-DBM,
4-ethyl-4'-ethoxy-DBM, 4-ethyl-4'-propoxy-DBM,
4-ethyl-4'-butoxy-DBM, 4-propyl-4'-methoxy-DBM,
4-propyl-4'-ethoxy-DBM, 4-propyl-4'-propoxy-DBM,
4-propyl-4'-butoxy-DBM, 4-isopropyl-4'-methoxy-DBM,
4-isopropyl-4'-ethoxy-DBM, 4-isopropyl-4'-propoxy-DBM,
4-isopropyl-4'-butoxy-DBM, 4-butyl-4'-methoxy-DBM,
4-butyl-4'-ethoxy-DBM, 4-butyl-4'-propoxy-DBM,
4-butyl-4'-butoxy-DBM, 4-tert-butyl-4'-methoxy-DBM,
4-tert-butyl-4'-ethoxy-DBM, 4-tert-butyl-4'-propoxy-DBM, and
4-tert-butyl-4'-butoxy-DBM. Among them
4-tert-butyl-4'-methoxy-DBM and DBM are especially preferred.
It is possible to use a single compound of formula (1) alone or a combination of two ore more thereof.

In formula (2), R'' is preferably H or Cl. Also preferably, m and m' each are 1. Specific examples of benzotriazole compounds of formula (2) are as follows:
2-(2,4-dihydroxyphenyl)-benzotriazole,
2-(2,4,6-trihydroxyphenyl)-benzotriazole,
5-chloro-2-(2,4-dihydroxyphenyl)-benzotriazole,
5-chloro-2-(2,4,6-trihydroxyphenyl)-benzotriazole,
5-bromo-2-(2,4-dihydroxyphenyl)-benzotriazole,
5-bromo-2-(2,4,6-trihydroxyphenyl)-benzotriazole,
dichloro-2-(2,4-dihydroxyphenyl)-benzotriazole, and
bromochloro-2-(2,4-dihydroxyphenyl)-benzotriazole. Among
them 2-(2,4-dihydroxyphenyl)-benzotriazole and
5-chloro-2-(2,4-dihydroxyphenyl)-benzotriazole are
especially preferred. It is possible to use a single compound of formula (2) alone or a combination of two ore more thereof.

Also, it is possible to use one ore more compound(s) of formula (1) together with one or more compound(s) of formula (2).

Water or an organic solvent such as alcohol or the like is added to the UV-absorbent to prepare a UV-absorbent solution, in which plastic lenses are dipped. Optionally, a surfactant to improve the dispersibility of the UV absorbent, a swelling agent such as benzyl alcohol or the like having the ability to swell plastics, an antioxidant, etc. may be added to the UV-absorbent solution. The amount of the surfactant, if added, is not specifically defined, but may generally be 1-50 ml/l of the solvent such as water, etc.

The plastic lenses of the invention are produced by dipping poly(thio)urethane lenses or lenses of a diethylene glycol bisallylcarbonate-type polymer in a solution of the UV absorbent of formula (1) and/or (2). The temperature of the UV-absorbent solution is not specifically defined, and may vary depending on the material of the plastic lenses to be dipped therein and the dipping time. From a practical viewpoint, the temperature preferably is in the range of 40-100°C.

Poly(thio)urethane lenses of the invention include polythiourethane lenses and polyurethane lenses, and these are produced by polymerizing thiourethane or urethane monomers. Concretely, the monomers include a combination of a polyisocyanate and a polythiol, and a combination of a polyisocyanate and a polyol.

The polyisocyanate is not specifically defined, and includes, for example,
alicyclic isocyanates such as hydrogenated 2,6-tolylene diisocyanate, hydrogenated meta- and para-phenylene diisocyanates, hydrogenated 2,4-tolylene diisocyanate, hydrogenated diphenylmethane diisocyanate, hydrogenated metaxylylene diisocyanate, hydrogenated paraxylylene diisocyanate, and isophorone diisocyanate;
isocyanate compounds, such as meta- and para-phenylene diisocyanates, 2,6-tolylene diisocyanate, 2,4-tolylene diisocyanate, 4,4'-diphenylmethane diisocyanate, meta- and para-xylylene diisocyanates, meta- and para-tetramethylxylylene diisocyanates, 2,6-naphthalene diisocyanate, 1,5-naphthalene diisocyanate, hexamethylene diisocyanate, octamethylene diisocyanate,
2,2,4-trimethylhexamethylene diisocyanate, tetramethylene diisocyanate, biuret reaction products of hexamethylene diisocyanate, trimers of hexamethylene diisocyanate, lysine diisocyanate, lysine triisocyanate, 1,6,11-undecane triisocyanate, and triphenylmethane triisocyanate;
sulfur-containing isocyanate compounds such as diphenyldisulfide-4,4'-diisocyanate,
2,2'-dimethyldiphenyldisulfide-5,5'-diisocyanate,
3,3'-dimethyldiphenyldisulfide-5,5'-diisocyanate,
3,3'-dimethyldiphenyldisulfide-6,6'-diisocyanate,
4,4'-dimethyldiphenyldisulfide-5,5'-diisocyanate,
3,3'-dimethoxydiphenyldisulfide-4,4'-diisocyanate,
4,4'-dimethoxydiphenyldisulfide-3,3'-diisocyanate, diphenylsulfone-4,4'-diisocyanate, diphenylsulfone-3,3'-diisocyanate, benzylidenesulfone-4,4'-diisocyanate, diphenylmethanesulfone-4,4'-diisocyanate,
4-methyldiphenylmethanesulfone-2,4'-diisocyanate,
4,4'-dimethoxydiphenylsulfone-3,3'-diisocyanate,
3,3'-dimethoxy-4,4'-diisocyanatobenzylsulfone,
4,4'-dimethyldiphenylsulfone-3,3'-diisocyanate,
4,4'-di-tert-butyldiphenylsulfone-3,3'-diisocyanate,
4,4'-dimethoxybenzene-ethylenedisulfone-3,3'-diisocyanate,
4,4'-dichlorodiphenylsulfone-3,3'-diisocyanate,
4-methyl-3-isocyanatobenzenesulfonyl-4'-isocyanatophenol ester,
4-methoxy-3-isocyanatobenzenesulfonyl-4'-isocyanatophenol ester,
4-methyl-3-isocyanatobenzenesulfonylanilido-3'-methyl-4'-isocyanate, dibenzenesulfonyl-ethlenediamine-4,4'-diisocyanate,
4,4'-dimethoxybenzenesulfonyl-ethylenediamine-3,3'-diisocyanate,
4-methyl-3-isocyanatobenzenesulfonylanilido-4-methyl-3'-isocyanate,
thiophene-2,5-diisocyanate,
thiophene-2,5-diisocyanatomethyl,
1,4-dithian-2,-diisocyanate,
1,4-dithian-2,5-diisocyanatomethyl,
1,4-dithian-2,3-diisocyanatomethyl,
1,4-dithian-2-isocyanatomethyl-5-isocyanatopropyl,
1,3-dithiolan-4,5-diisocyanate,
1,3-dithiolan-4,5-diisocyanatomethyl,
1,3-dithiolan-2-methyl-4,5-diisocyanatomethyl,
1,3-dithiolan-2,2-diisocyanatoethyl, tetrahydrothiophene-2,5-diisocyanate, tetrahydrothiophene-2,5-diisocyanatomethyl, tetrahydrothiophene-2,5-diisocyanatoethyl, and tetrahydrothiophene-3,4-diisocyanatomethyl.

Examples of the polythiol compound include
aliphatic thiols such as methanedithiol, 1,2-ethanedithiol,
1,1-propanedithiol, 1,2-propanedithiol, 1,3-propanedithiol,
2,2-propanedithiol, 1,6-hexanedithiol, 1,2,3-propanetrithiol, tetrakis(mercaptomethyl)methane, 1,1-cyclohexanedithiol,
1,2-cyclohexanedithiol, 2,2-dimethylpropane-1,3-dithiol,
3,4-dimethoxybutane-1,2-dithiol,
2-methylcyclohexane-2,3-dithiol,
1,1-bis(mercaptomethyl)cyclohexane,
bis(2-mercaptoethyl) thiomalate,
2-mercaptoethyl 2,3-dimercaptosuccinate,
2,3-dimercapto-1-propanol 2-mercaptoacetate,
2,3-dimercapto-1-propanol 3-mercaptoacetate,
diethylene glycol bis(2-mercaptoacetate),
diethylene glycol bis(3-mercaptopropionate),
1,2-dimercaptopropylmethyl ether,
2,3-dimercaptopropylmethyl ether,
2,2-bis(mercaptomethyl)-1,3-propanedithiol,
bis(2-mercaptoethyl) ether,
ethylene glycol bis(2-mercaptoacetate),
ethylene glycol bis(3-mercaptopropionate),
trimethylolpropane tris(2-mercaptoacetate),
trimethylolpropane tris(3-mercaptopropionate),
pentaerythritol tetrakis(2-mercaptoacetate),
pentaerythritol tetrakis(3-mercaptopropionate), and
1,2-bis(2-mercaptoethylthio)-3-mercaptopropane;
aromatic thiols such as 1,2-dimercaptobenzene,
1,3-dimercaptobenzene, 1,4-dimercaptobenzene,
1,2-bis(mercaptomethyl)benzene,
1,3-bis(mercaptomethyl)benzene,
1,4-bis(mercaptomethyl)benzene,
1,3-bis(mercaptoethyl)benzene,
1,4-bis(mercaptoethyl)benzene,
1,2-bis(mercaptomethoxy)benzene,
1,3-bis(mercaptomethoxy)benzene,
1,4-bis(mercaptomethoxy)benzene,
1,2-bis(mercaptoethoxy)benzene,
1,3-bis(mercaptoethoxy)benzene,
1,4-bis(mercaptoethoxy)benzene, 1,2,3-trimercaptobenzene,
1,2,4-trimercaptobenzene, 1,3,5-trimercaptobenzene,
1,2,3-tris(mercaptomethyl)benzene,
1,2,4-tris(mercaptomethyl)benzene,
1,3,5-tris(mercaptomethyl)benzene,
1,2,3-tris(mercaptoethyl)benzene,
1,2,4-tris(mercaptoethyl)benzene,
1,3,5-tris(mercaptoethyl)benzene,
1,2,3-tris(mercaptomethoxy)benzene,
1,2,4-tris(mercaptomethoxy)benzene,
1,3,5-tris(trimercaptomethoxy)benzene,
1,2,3-tris(mercaptoethoxy)benzene,
1,2,4-tris(mercaptoethoxy)benzene,
1,3,5-tris(mercaptoethoxy)benzene,
1,2,3,4-tetramercaptobenzene, 1,2,3,5-tetramercaptobenzene,
1,2,4,5-tetramercaptobenzene,
1,2,3,4-tetrakis(mercaptomethyl)benzene,
1,2,3,5-tetrakis(mercaptomethyl)benzene,
1,2,4,5-tetrakis(mercaptomethyl)benzene,
1,2,3,4-tetrakis(mercaptoethyl)benzene,
1,2,3,5-tetrakis(mercaptoethyl)benzene,
1,2,4,5-tetrakis(mercaptoethyl)benzene,
1,2,3,4-tetrakis(mercaptoethyl)benzene,
1,2,3,5-tetrakis(mercaptomethoxy)benzene,
1,2,4,5-tetrakis(mercaptomethoxy)benzene,
1,2,3,4-tetrakis(mercaptoethoxy)benzene,
1,2,3,5-tetrakis(mercaptoethoxy)benzene,
1,2,4,5-tetrakis(mercaptoethoxy)benzene,
2,2'-dimercaptobiphenyl, 4,4'-dimercaptobiphenyl,
4,4'-dimercaptobibenzyl, 2,5-toluenedithiol,
3,4-toluenedithiol, 1,4-naphthalenedithiol,
1,5-naphthalenedithiol, 2,6-naphthalenedithiol,
2,7-naphthalenedithiol, 2,4-dimethylbenzene-1,3-dithiol,
4,5-dimethylbenzene-1,3-dithiol,
9,10-anthracenedimethanethiol,
1,3-di(p-methoxyphenyl)propane-2,2-dithiol,
1,3-diphenylpropane-2,2-dithiol, phenylmethane-1,1-dithiol, and 2,4-di(p-mercaptophenyl)pentane; halogen (e.g. Cl or Br)-substituted aromatic thiols such as
2,5-dichlorobenzene-1,3-dithiol,
1,3-di(p-chlorophenyl)propane-2,2-dithiol,
3,4,5-tribromo-1,2-dimercaptobenzene, and
2,3,4,6-tetrachloro-1,5-bis(mercaptomethyl)benzene; aromatic thiols having sulfur atom(s) in addition to mercapto groups, such as 1,2-bis(mercaptomethylthio)benzene,
1,3-bis(mercaptomethylthio)benzene,
1,4-bis(mercaptomethylthio)benzene,
1,2-bis(mercaptoethylthio)benzene,
1,3-bis(mercaptoethylthio)benzene,
1,4-bis(mercaptoethylthio)benzene,
1,2,3-tris(mercaptomethylthio)benzene,
1,2,4-tris(mercaptomethylthio)benzene,
1,3,5-tris(mercaptomethylthio)benzene,
1,2,3-tris(mercaptoethylthio)benzene,
1,2,4-tris(mercaptoethylthio)benzene,
1,3,5-tris(mercaptoethylthio)benzene,
1,2,3,4-tetrakis(mercaptomethylthio)benzene,
1,2,3,5-tetrakis(mercaptomethylthio)benzene,
1,2,4,5-tetrakis(mercaptomethylthio)benzene,
1,2,3,4-tetrakis(mercaptoethylthio)benzene,
1,2,3,5-tetrakis(mercaptoethylthio)benzene, and
1,2,4,5-tetrakis(mercaptoethylthio)benzene, and their derivatives derived through nucleus alkylation; aliphatic thiols having sulfur atom(s) in addition to mercapto groups, such as bis(mercaptomethyl) sulfide, bis(mercaptoethyl) sulfide, bis(mercaptopropyl) sulfide,
bis(mercaptomethylthio)methane,
bis(2-mercaptoethylthio)methane,
bis(3-mercaptopropyl)methane,
1,2-bis(mercaptomethylthio)ethane,
1,2-(2-mercaptoethylthio)ethane,
1,2-(3-mercaptopropyl)ethane,
1,3-bis(mercaptomethylthio)propane,
1,3-bis(2-mercaptoethylthio)propane,
1,3-bis(3-mercaptopropylthio)propane,
1,2-bis(2-mercaptoethylthio)-3-mercaptopropane,
2-mercaptoethylthio-1,3-propanedithiol,
1,2,3-tris(mercaptomethylthio)propane,
1,2,3-tris(2-mercaptoethylthio)propane,
1,2,3-tris(3-mercaptopropylthio)propane,
tetrakis(mercaptomethylthiomethyl)methane,
tetrakis(2-mercaptoethylthiomethyl)methane,
tetrakis(3-mercaptopropylthiomethyl)methane,
bis(2,3-dimercaptopropyl) sulfide,
2,5-dimercapto-1,4-dithian, bis(mercaptomethyl) disulfide, bis(mercaptoethyl) disulfide, and bis(mercaptopropyl) disulfide, and their esters with thioglycolic acid and mercaptopropionic acid, as well as
hydroxymethylsulfide bis(2-mercaptoacetate),
hydroxymethylsulfide bis(3-mercaptopropionate),
hydroxyethylsulfide bis(2-mercaptoacetate),
hydroxyethylsulfide bis(3-mercaptopropionate),
hydroxypropylsulfide bis(2-mercaptoacetate),
hydroxypropylsulfide bis(3-mercaptopropionate),
hydroxymethyldisulfide bis(2-mercaptoacetate),
hydroxymethyldisulfide bis(3-mercaptopropionate),
hydroxyethyldisulfide bis(2-mercaptoacetate),
hydroxyethyldisulfide bis(3-mercaptopropionate),
hydroxypropyldisulfide bis(2-mercaptoacetate),
hydroxypropyldisulfide bis(3-mercaptopropionate),
2-mercaptoethylether bis(2-mercaptoacetate),
2-mercaptoethylether bis(3-mercaptopropionate),
1,4-dithian-2,5-diol bis(2-mercaptoacetate),
1,4-dithian-2,5-diol bis(3-mercaptopropionate),
bis(2-mercaptoethyl) thioglycolate,
bis(2-mercaptoethyl) thiodipropionate,
bis(2-mercaptoethyl) 4,4'-thiodibutyrate,
bis(2-mercaptoethyl) dithiodiglycolate,
bis(2-mercaptoethyl) dithiodipropionate,
bis(2-mercaptoethyl) 4,4'-dithiodibutyrate,
bis(2,3-dimercaptopropyl) thiodiglycolate,
bis(2,3-dimercaptopropyl) thiodipropionate,
bis(2,3-dimercaptopropyl) dithiodiglycolate,
(2,3-dimercaptopropyl) dithiodipropionate,
4-mercaptomethyl-3,6-dithiaoctane-1,8-dithiol,
bis(mercaptomethyl)-3,6,9-trithia-1,11-undecanedithiol, and bis(1,3-dimercapto-2-propyl) sulfide;
heterocyclic compounds having sulfur atom(s) in addition to mercapto groups, such as 3,4-thiophenedithiol,
tetrahydrothiophene-2,5-dimercaptomethyl,
2,5-dimercapto-1,3,4-thiadiazole,
2,5-dimercapto-1,4-dithian, and
2,5-dimercaptomethyl-1,4-dithian.
Among them, isocyanate compounds having sulfur atom(s), and polythiol compounds having sulfur atom(s) in addition to mercapto groups are especially preferred, since they provide high-refractivity plastic lenses.

Examples of the polyol compound includes aliphatic polyols such as ethylene glycol, diethylene glycol, propylene glycol, dipropylene glycol, butylene glycol, neopentyl glycol, glycerin, trimethylolethane, trimethylolpropane, butanetriol, 1,2-methylglucoside, pentaerythritol, dipentaerythritol,
tripentaerythritol, triethylene glycol, polyethylene glycol,
tris(2-hydroxyethyl) isocyanurate, cyclobutanediol, cyclopentanediol, cyclohexanediol, cycloheptanediol, cyclooctanediol, bicyclo[4.3.0]-nonanediol,
dicyclohexanediol, tricyclo[5.3.1.1]dodecanediol, spiro[3.4]octanediol, and butylcyclohexanediol; aromatic polyols such as dihydroxynaphthalene, trihydroxynaphthalene, tetrahydroxynaphthalene, dihydroxybenzene, benzenetriol, trihydroxyphenanthrene, bisphenol A, bisphenol F, xylylene glycol, and tetrabromobisphenol A, and their adducts with alkylene oxides such as ethylene oxide and propylene oxide;
bis[4-(hydroxyethoxy)phenyl] sulfide,
bis-[4-(2-hydroxypropoxy)phenyl] sulfide,
bis-[4-(2,3-dihydroxypropoxy)phenyl] sulfide,
bis-[4-(4-hydroxycyclohexyloxy)phenyl] sulfide,
bis-[2-methyl-4-(hydroxyethoxy)-6-butylphenyl] sulfide, and their adducts with at most 3 molecules on average, per one hydroxyl group, of ethylene oxide and/or propylene oxide; polyols having sulfur atoms(s), such as di-(2-hydroxyethyl) sulfide, 1,2-bis-(2-hydroxyethylmercapto)ethane, bis(2-hydroxyethyl) disulfide, 1,4-dithian-2,5-diol, bis(2,3-dihydroxypropyl) sulfide, tetrakis(4-hydroxy-2-thiabutyl)methane,
bis(4-hydroxyphenyl) sulfone (trade name, bisphenol S), tetrabromobisphenol S, tetramethylbisphenol S,
4,4'-thiobis(6-tert-butyl-3-methylphenol), and
1,3-bis(2-hydroxyethylthioethyl)-cyclohexane. Among them polyol compounds having sulfur atom(s) are especially preferred, since they provide high-refractivity plastic lenses.

The (thio)urethane monomers are known compounds. References concretely disclosing the monomers are, for example, Japanese Patent Laid-Open Nos.
127914/1983, 136601/1982, 163012/1989, 236386/1991,
281312/1991, 159275/1992, 148340/1993, 065193/1994,
256459/1994, 313801/1994, 192250/1994, 063902/1995,
104101/1995, 118263/1995, 118390/1995, 316250/1995,
199016/1985, 217229/1985, 236818/1987, 255901/1987,
267316/1987, 130615/1988, 130614/1988, 046213/1988,
245421/1988, 265201/1988, 090167/1989, 090168/1989,
090169/1989, 090170/1989, 096208/1989, 152019/1989,
045611/1989, 213601/1989, 026622/1989, 054021/1989,
311118/1989, 295201/1989, 302202/1989, 153302/1990,
295202/1989, 802/1990, 036216/1990, 058517/1990,
167330/1990, 270859/1990, 84031/1991, 084021/1991,
124722/1991, 78801/1992, 117353/1992, 117354/1992,
256558/1992, 78441/1993, 273401/1993, 093801/1993,
080201/1993, 297201/1993, 320301/1993, 208950/1993,
072989/1994, 256342/1994, 122748/1994, 165859/1995,
118357/1995, 242722/1995, 247335/1995, 252341/1995,
73732/1996, 092345/1996, 228659/1995, 3267/1996,
252207/1995, 324118/1995, 208651/1997.

Needless to say, the polyisocyanate compounds, polyol compounds and polythiol compounds disclosed in these patent publications are all useful (thio)urethane monomers for in the present invention.

It also goes without saying that it is possible to add other plastic lens monomers such as episulfide monomers, diethylene glycol allylcarbonate monomers and others to these (thio)urethane monomers in order to improve the physical properties such as heat resistance, refractivity and others of the plastic lenses of the present invention.

The lenses of a diethylene glycol bisallylcarbonate-type polymer include lenses of diethylene glycol bisallylcarbonate homopolymer and lenses of copolymers of diethylene glycol bisallylcarbonate and other monomers copolymerizable therewith. Specific examples of such comonomers are aromatic vinyl compounds such as styrene, α-methylstyrene, vinyltoluene, chlorostyrene, chloromethylstyrene, and divinylbenzene;
mono(meth)acrylates such as methyl(meth)acrylate,
n-butyl(meth)acrylate, n-hexyl(meth)acrylate,
cyclohexyl(meth)acrylate, 2-ethylhexyl(meth)acrylate,
methoxydiethylene glycol(meth)acrylate, methoxypolyethylene glycol(meth)acrylate,
3-chloro-2-hydroxypropyl(meth)acrylate,
stearyl(meth)acrylate, lauryl(meth)acrylate,
phenyl(meth)acrylate, glycidyl(meth)acrylate, and benzyl(meth)acrylate;
mono(meth)acrylates having hydroxyl group(s), such as 2-hydroxyethyl(meth)acrylate, 2-hydroxypropyl(meth)acrylate,
3-hydroxypropyl(meth)acrylate,
3-phenoxy-2-hydroxypropyl(meth)acrylate, and
4-hydroxybutyl(meth)acrylate;
di(meth)acrylates such as ethylene glycol di(meth)acrylate, diethylene glycol di(meth)acrylate,
triethylene glycol di(meth)acrylate,
polyethylene glycol di(meth)acrylate,
1,3-butylene glycol di(meth)acrylate,
1,6-hexanediol di(meth)acrylate,
neopentyl glycol di(meth)acrylate,
polypropylene glycol di(meth)acrylate,
2-hydroxy-1,3-di(meth)acryloxypropane,
2,2-bis[4-((meth)acryloxyethoxy)phenyl]propane,
2,2-bis[4-((meth)acryloxy-diethoxy)phenyl]propane, and
2,2-bis[4-((meth)acryloxy-polyethoxy)phenyl]propane;
tri (meth) acrylates such as trimethylolpropane trimethacrylate,
and tetramethylolmethane trimethacrylate;
tetra(meth)acrylates such as tetramethylolmethane and tetra(meth)acrylate;
diallyl phthalate, diallyl isophthalate and diallyl terephthalate. The term"(meth) acrylate" as used herein includes both methacrylate and acrylate. Among the above compounds aromatic monomers are especially preferred, since they provide high-refractivity plastic lenses.

Copolymers of diethylene glycol bisallylcarbonate and other monomers are known. Examples are disclosed in Japanese Patent Laid-Open Nos. 41965/1979, 125487/1976,and in Japanese Patent Re-Laid-Open No. 503809/1989. The mixtures of diethylene glycol bisallylcarbonate and monomers copolymerizable Therewith as disclosed in these patent publications are all useful as diethylene glycol bisallylcarbonate monomers in the present invention.

Poly(thio)urethane lenses and lenses of a diethylene glycol bisallylcarbonate-type polymer according to the invention are prepared by polymerizing the above-mentioned plastic lens monomers. Themethodofpolymerizingis not specif ically defined. However, in general cast polymerization is employed.
Specifically, a plastic lens monomer such as that mentioned above is cast into a lens mold, and cured therein at a temperature of -20°C to 150°C to give a plastic lens. If desired, a polymerization catalyst such as that described in Japanese Patent laid-Open Nos. 063902/1995, 104101/1995, 208621/1997, 255781/1997, etc.; an internal release agent, an antioxidant and other auxiliary agents such as those described in Japanese Patent Laid-Open Nos. 163012/1989, 281312/1991, etc may optionally be added to the plastic lens monomer.

Also, the plastic lenses of the invention may be optionally colored with a colorant, if desired. To improve their scratch resistance, the plastic lenses may be coated with a hard film. For this purpose a coating liquid that contains an organosilicon compound or inorganic fine particles of tin oxide, silicon oxide, zirconium oxide, titanium oxide, etc is usable. To improve their impact resistance, the plastic lenses may be coated with a primer layer that consists essentially of polyurethane. To prevent them from glaring, the plastic lenses may be coated with an anti-glare film that contains silicon oxide, titanium dioxide, zirconium oxide, tantalum oxide, etc.. To improve their water repellency, the anti-glare film of the plastic lenses may be coated with a water-repellent film of a flourine atom-containing organosilicon compound.

The plastic lenses of the invention are produced by dipping specific plastic lenses in a solution containing a specific UV-absorbent, and are therefore free from the problems connected with lenses produced by adding a UV-absorbent to a plastic lens monomer followed by polymerizing the monomer. These problems include optical strain and fog of lenses. In the lenses having a UV-absorbent added to the lens monomer the UV-absorbent is uniformly dispersed throughout the lens. Contrary thereto, the plastic lenses of the invention are produced by dipping plastic lenses in a UV-absorbent solution in such a manner that the UV-absorbent infiltrates into the lenses. Thus, the UV-absorbent is present only in the surface region of the lens, but does not penetrate through the surface to reach the depth of the lens.

The plastic lenses of the invention may be of different types, and will suitably be selected depending on their applications. For example, according to one embodiment plastic lenses for spectacles are provided wherein the center of the lens, when having a thickness of from 1.8-2.2 mm, has an yellow index (YI) of 0.8-1.2 and a UV-transmittance at 385 nm of 1-4 %.

### Examples

The invention is further described with reference to the following, non-limiting examples. The physical properties of the plastic lenses produced herein are measured according to the methods mentioned below.

### <1> Yellow Index (YI):

This is measured according to JIS K7103-1977 which indicates the YI of plastics and test methods for determining it.

### <2> Transmittance:

The UV-transmittance at 385 nm of each plastic lens was measured using a Hitachi U3410 spectrophotometer.

### Example 1

100 parts by weight of diethylene glycol bisallylcarbonate and 3 parts by weight of diisopropyl peroxydicarbonate were mixed with each other and fully stirred. The resulting mixture was cast into a glass mold for lenses (lens power: D0.00, lens diameter 70 mm, lens thickness 2.2 mm), which had been previously prepared and equipped with a resin gasket. The mold was put into an electric furnace, and gradually heated therein from 40-90°C within a period of 20 hours and then kept at 90°C for 1 hour, thus polymerizing the monomer.

After the polymerization, the gasket and the mold were released, and the formed lens was further heated at 120°C for 1 hour.

Then, 7.5 g of 4-tert-butyl-4'-methoxydibenzoylmethane as a UV-absorbent and 10 ml of Nikka Sunsalt 7000 (Nikka Chemical's nonionic surfactant) were added to 1 liter of water to prepare a UV-absorbent solution and heated at 85°C.

The lens prepared above was dipped in the UV-absorbent solution for 40 minutes, and then subjected to heat treatment at 120°C for 1 hour. Through this process, the UV-absorbent was infiltrated into the plastic lens.

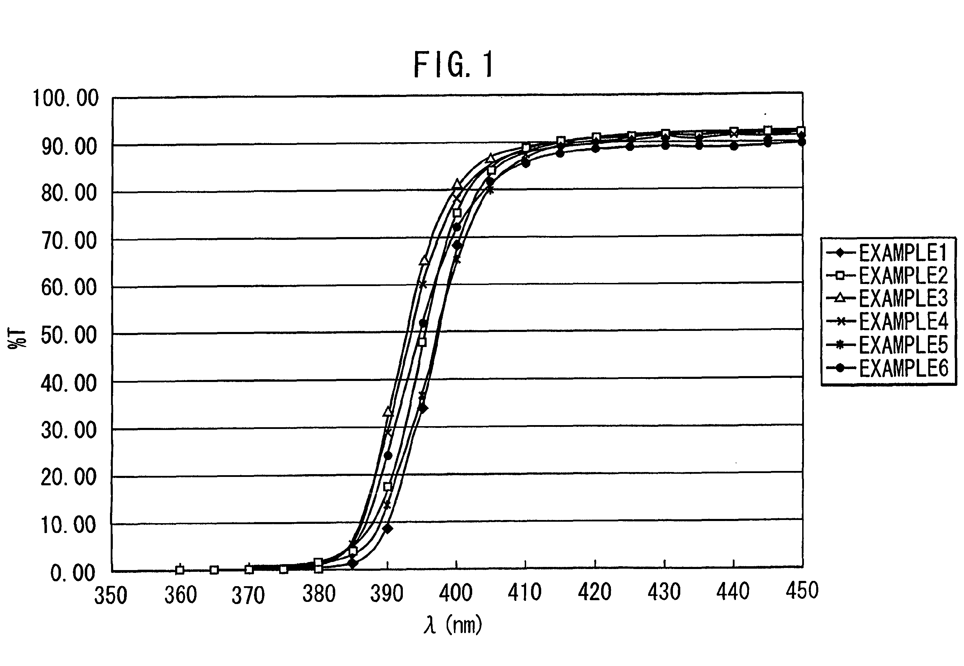

The center of the lens (thickness 2.2 mm) thus obtained had a YI of 1.0. The lens was slightly yellowish, the UV-transmittance at 385 nm was 1 % and the UV-cutting capability was good. The spectral transmittance curve of the lens is shown in Fig. 1.

### Example 2

In the same manner as in Example 1 a lens was produced, with the exception that the UV-absorbent solution used did not contain a surfactant.

The center of the lens (thickness 2.2 mm) thus obtained had a YI of 0.9. The lens was slightly yellowish, the UV-transmittance at 385 nm was 4 % and the UV-cutting capability was good. The spectral transmittance curve of the lens is shown in Fig. 1.

### Example 3

In the same manner as in Example 1 a lens was produced, with the exception that the UV absorbent solution used was prepared by adding 7.5 g of dibenzoylmethane and 10 ml of Nikka Sunsalt 7000 (Nikka Chemical's nonionic surfactant) to 1 liter of water.

The center of the lens (thickness 2.2 mm) thus obtained had a YI of 1.1. The lens was slightly yellowish, the UV-transmittance at 385 nm was 4 % and the UV-cutting capability was good. The spectral transmittance curve of the lens is shown in Fig. 1.

### Example 4

In the same manner as in Example 1 a lens was produced, with the exception that the UV absorbent solution used was prepared by adding 7.5 g of 2-(2,4-dihydroxyphenyl)-benzotriazole and 10 ml of Nikka Sunsalt 7000 (Nikka Chemical's nonionic surfactant) to 1 liter of water.

The center of the lens (thickness 2.2 mm) thus obtained had a YI of 1.1. The lens was slightly yellowish, the UV-transmittance at 385 nm was 4 % and the UV-cutting capability was good. The spectral transmittance curve of the lens is shown in Fig. 1.

### Example 5

In the same manner as in Example 1 a lens was produced, with the exception that the UV absorbent solution was prepared by adding 7.5g of 5-chloro-2-(2,4-dihydroxyphenyl)-benzotriazole and 10 ml of Nikka Sunsalt 7000 (Nikka Chemical's nonionic surfactant) to 1 liter of water.

The center of the lens (thickness 2.2 mm) thus obtained had a YI of 1.0. The lens was slightly yellowish, the UV-transmittance at 385 nm was 3 % and the UV-cutting capability was good. The spectral transmittance curve of the lens is shown in Fig. 1.

### Example 6

0.45 parts by weight of dimethyl tin dichloride, and 0.16 parts by weight of an acid phosphate, JP506 (Johoku Chemical's lubricant) were added to and mixed with 47.5 parts by weight of 1,3-diisocyanatomethylcyclohexane, and then 26.0 parts by weight of 2,5-dimercaptomethyl-1,4-dithian and 26.5 parts by weight of pentaerythritol tetrakismercaptoacetate were added under further stirring and under a reduced pressure of 10 mHg for 30 minutes to prepare a monomer composition for lenses.

Next, the monomer composition was cast into a glass mold for lenses (lens power: D0.00, lens diameter 80 mm, lens thickness 1.6 mm), which had been previously prepared and equipped with a resin gasket. The mold was put into an electric furnace, and gradually heated therein from 20-100°C within a period of 20 hours. After having been thus heated, the mold was taken out of the furnace and its gasket was removed. Then, it was again put into the furnace, heated therein up to 120°C within a period of 1 hour, and was then kept at 120°C for 3 hours. Through this process the monomers were polymerized.

After the polymerization, the mold was released, and the formed lens was further heated at 120°C for 1 hour.

7.5 g of dibenzoylmethane and 10 ml of Nikka Sunsalt 7000 (Nikka Chemical's nonionic surfactant) were added to 1 liter of water to prepare a UV absorbent solution and heated at 85°C.

The lens prepared hereinabove was dipped in the UV absorbent solution for 40 minutes, and then subjected to heat treatment at 120°C for 1 hour. Through this process, the UV absorbent was infiltrated into the plastic lens.

The center of the lens (thickness 1.6 mm) thus obtained had a YI of 1.0. The lens was slightly yellowish, the UV-transmittance at 385 nm was 5 % and the UV-cutting capability was good. The spectral transmittance curve of the lens is shown in Fig. 1.

### Comparative Example 1

In the same manner as in Example 1 a lens was produced, with the exception that the UV-absorbent solution used was prepared by adding 7.5 g of 2-(2-hydroxy-5-methylphenyl)-benzotriazole and 10 ml of Nikka Sunsalt 7000 (Nikka Chemical's nonionic surfactant) to 1 liter of water.

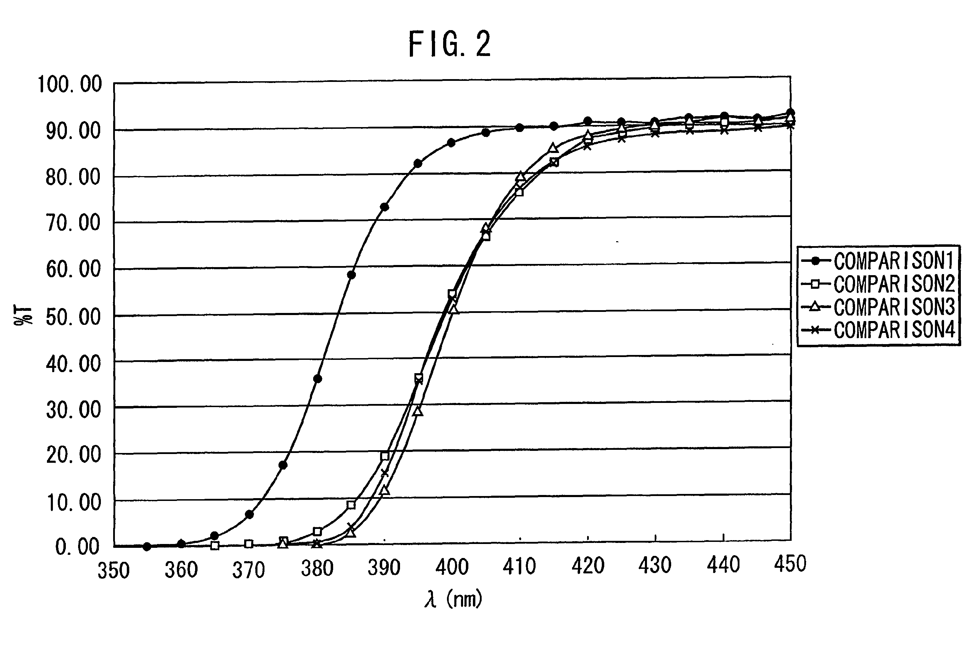

The center of the lens (thickness 2.2 mm) thus obtained had a YI of 0.8. The lens was almost colorless, but the UV-transmittance at 385 nm was 58 %. The lens had no UV-cutting capability. The spectral transmittance curve of the lens is shown in Fig. 2.

### Comparative Example 2

In the same manner as in Example 1 a lens was produced, with the exception that the UV absorbent solution used was prepared by adding 7.5 g of 2,2'-dihydroxy-4-methoxybenzophenone and 10 ml of Nikka Sunsalt 7000 (Nikka Chemical's nonionic surfactant) to 1 liter of water, and the processing time was 5 minutes.

The center of the lens (thickness 2.2 mm) thus obtained had a YI of 1.8. The lens was slightly yellowish, the UV-transmittance at 385 nmwas 10 % and the UV-cutting capabilitywas good. However, the lens obtained herein was inferior to those obtained in the Examples with respect to the YI and the UV-transmittance. The spectral transmittance curve of the lens is shown in Fig. 2.

### Comparative Example 3

In the same manner as in Example 1 a lens was produced, with the exception that the UV absorbent solution used was prepared by adding 7.5 g of 2,2',4,4'-tetrahydroxybenzophenone and 10 ml of Nikka Sunsalt 7000 (Nikka Chemical's nonionic surfactant) to 1 liter of water, and the processing time was 5 minutes.

The center of the lens (thickness 2.2 mm) thus obtained had a YI of 1.5. The lens was slightly yellowish, the UV-transmittance at 385 nm was 4 % and the UV-cutting capability was good. However, the lens obtained herein was inferior to those obtained in the Examples with respect to the YI. The spectral transmittance curve of the lens is shown in Fig. 2.

### Comparative Example 4

In the same manner as in Example 6 a lens was produced, with the exception that the UV absorbent solution used was prepared by adding 7.5 g of 2,2'-dihydroxy-4-methoxybenzophenone and 10 ml of Nikka Sunsalt 7000 (Nikka Chemical's nonionic surfactant) to 1 liter of water, and the processing time was 15 minutes.

The center of the lens (thickness 1.6 mm) thus obtained had a YI of 1.6. The lens was slightly yellowish, the UV-transmittance at 385 nm was 5 % and the UV-cutting capability was good. However, the lens obtained herein was inferior to those obtained in the Examples with respect to the YI. The spectral transmittance curve of the lens is shown in Fig. 2.

The data obtained in Examples 1-6 and in Comparative Examples 1-4 are summarized in Table 1.

**Table 1**

| | Starting Monomer(s) (wt.pts.) | UV Absorbent and Surfactant (amount added /liter of water) | Processing Conditions | | YI | Center Thickness (mm) | Transmittance 385 nm (%) |
|---|---|---|---|---|---|---|---|
| | | | °C | min | | | |
| Example 1 | diethylene glycol bisallylcarbonate (100) | 4-tert-butyl-4'-methoxy-dibenzoylmethane (7.5 g) Nikka Sunsalt 7000 (10 ml) | 85 | 40 | 1.0 | 2.2 | 1 |
| Example 2 | diethylene glycol bisallylcarbonate (100) | 4-tert-butyl-4'-methoxy-dibenzoylmethane (7.5 g) | 85 | 40 | 0.9 | 22 | 4 |
| Example 3 | diethylene glycol bisallylcarbonate (100) | dibenzoylmethane (7.5 g) Nikka Sunsalt 7000 (10 ml) | 85 | 40 | 1.1 | 2.2 | 4 |
| Example 4 | diethylene glycol bisallylcarbonate (100) | 2-(2,4-dihydroxyphenyl)-benzotriazole (7.5g) Nikka Sunsalt 7000 (10 ml) | 85 | 40 | 1.1 | 2.2 | 4 |
| Example 5 | diethylene glycol bisallylcarbonate (100) | 5-chloro-2-(2,4-dihydroxy-phenyl)-benzotriazole (7.5 g) Nikka Sunsalt 7000 (10 ml) | 85 | 40 | 1.0 | 2.2 | 3 |
| Example 6 | 1,3-diisocyanatomethyl cyclohexane (47.5) 2,5-dimeraptomethyl-1,4-d ithian (26.0) pentaerythritol tetrakis-mercaptoacetate (26.5) | dibenzoylmethane (7.5 g) Nikka Sunsalt 7000 (10 ml) | 85 | 40 | 1.0 | 1.6 | 5 |
| Comp. Ex. 1 | diethylene glycol bisallylcarbonate (100) | 2-(2-hydroxy-5-methylphenyl) -benzotriazole (7.5 g) Nikka Sunsalt 7000 (10 ml) | 85 | 40 | 0.8 | 2.2 | 58 |
| Comp. Ex. 2 | diethylene glycol bisallylcarbonate (100) | 2,2'-dihydroxy-4-methoxy-benzophenone (7.5 g) Nikka Sunsalt 7000 (10 ml) | 85 | 5 | 1.8 | 2.2 | 10 |
| Comp. Ex. 3 | diethylene glycol bisallylcarbonate (100) | 2,2',4,4'-tetrahydroxy-benzophenone(7.5 g) Nikka Sunsalt 7000 (10 ml) | 85 | 5 | 1.5 | 2.2 | 4 |
| Comp.Ex. 4 | 1,3-diisocyanatomethyl-cyclohexane (47.5) 2,5-dimercaptomethyl-1,4-2,5-dimercaptomethyl-1,4-dithian (26.0) pentaerythritol tetrakis-mercaptoacetate (26.5) | 2,2'-dihydroxy-4-methoxy-benzophenone (7.5 g) benzophenone (7.5 g) Nikka Sunsalt 7000 (10 ml) | 85 85 | 15 15 | 1.6 1.6 | 1.6 1.6 | 5 5 |

## Claims

1. Method for producing plastic lenses, which comprises dipping poly(thio)urethane lenses or lenses of a diethylene glycol bisallylcarbonate-type polymer in a solution comprising at least one compound selected from dibenzoylmethane compounds of the general formula (1) 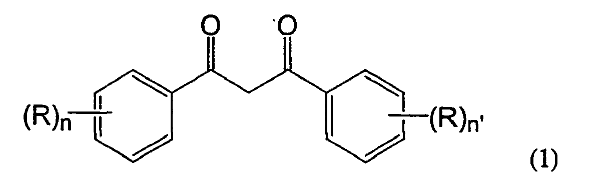 wherein R and R' each represent a linear or branched C₁₋₈-alkyl group, or a linear or branched C₁₋₈-alkoxyl group; and n and n' independently are 0 or an integer of 1-3; and benzotriazole compounds of the general formula (2) 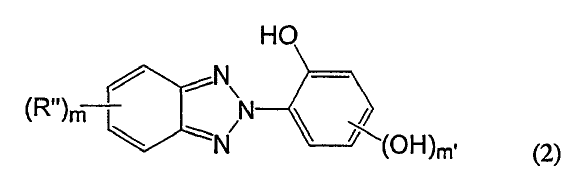 wherein R'' represents a hydrogen atom, a chlorine atom or a bromine atom; and m and m' each indicate 1 or 2.

2. Method according to claim 1, wherein the lenses dipped in the solution are subsequently subjected to a heat treatment.

3. Plastic lens, comprising a poly(thio)urethane lens or a diethylene glycol bisallylcarbonate-type polymer lens having at least one compound selected from dibenzoylmethane compounds of the general formula (1) and benzotriazole compounds of the general formula (2) as defined in claim 1 on or in the vicinity of the surface thereof.

4. Plastic lens according to claim 3, having a yellow index (YI) of 0.8-1.2 and a UV-transmittance at 385 nm of 1-4 % when measured at the center of the lens having a thickness of 1.8-2.2 mm,

5. Use of a plastic lens according to any of claims 3 to 4 for the production of UV-absorbing spectacles lenses.

## Patentansprüche

1. Verfahren zur Herstellung von Kunststofflinsen, welches das Eintauchen von Poly(thio)urethan-Linsen oder Linsen eines Polymers vom Diethylenglycolbisallylcarbonat-Typ in eine Lösung umfaßt, die mindestens eine Verbindung enthält, die ausgewählt ist aus Dibenzoylmethan-Verbindungen der allgemeinen Formel (1): 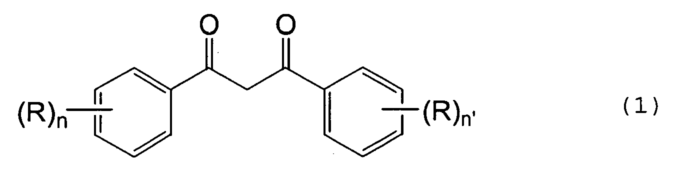 worin R und R' jeweils eine lineare oder verzweigte C₁₋₈-Alkylgruppe oder eine lineare oder verzweigte C₁₋₈₋Alkoxygruppe bedeuten; und n und n' unabhängig 0 oder eine ganze Zahl von 1 bis 3 sind; und Benzotriazol-Verbindungen der allgemeinen Formel (2): 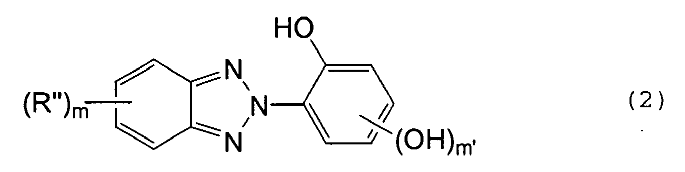 worin R" ein Wasserstoffatom, ein Chloratom oder ein Bromatom bedeutet; und m und m' jeweils 1 oder 2 bedeuten.

2. Verfahren gemäß Anspruch 1, bei dem die in die Lösung eingetauchten Linsen anschließend einer Wärmebehandlung unterzogen werden.

3. Kunststofflinse, umfassend eine Poly(thio)urethan-Linse oder eine Linse eines Polymers vom Diethylenglycolbisallylcarbonat-Typ mit mindestens einer Verbindung, ausgewählt aus Dibenzoylmethan-Verbindungen der allgemeinen Formel (1) und Benzotriazol-Verbindungen der allgemeinen Formel (2), wie in Anspruch 1 definiert, an oder in der Nähe ihrer Oberfläche.

4. Kunststofflinse gemäß Anspruch 3-mit einer Vergilbungszahl (YI) von 0,8 bis 1,2 und einem UV-Transmissionsgrad bei 385 nm von 1 bis 4 %, wenn er in der Mitte der Linse mit einer Dicke von 1,8 bis 2,2 mm gemessen wird.

5. Verwendung einer Kunststofflinse gemäß mindestens einem der Ansprüche 3 bis 4 für die Herstellung von UV-absorbierenden Brillengläsern.

## Revendications

1. Procédé pour produire des lentilles en plastique, qui comprend l'immersion de lentilles en poly(thio)uréthane ou de lentilles en polymère de type bis(allylcarbonate) de diéthylène glycol dans une solution comprenant au moins un composé choisi parmi les composés de dibenzoylméthane de la formule générale (1) 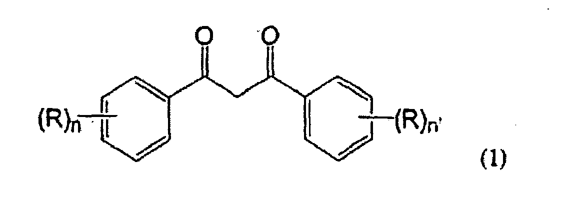 dans laquelle R et R' représentent chacun un groupe alkyle en C₁₋₈ linéaire ou ramifié ou un groupe alcoxyle en C₁₋₈ linéaire ou ramifié; et n et n' sont indépendamment 0 ou un nombre entier de 1 - 3; et les composés de benzotriazole de la formule générale (2) 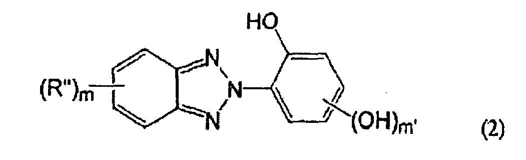 dans laquelle R" représente un atome d'hydrogène, un atome de chlore ou un atome de brome; et m et m' indiquent chacun 1 ou 2.

2. Procédé selon la revendication 1, dans lequel les lentilles qui ont été immergées dans la solution sont ensuite soumises à un traitement thermique.

3. Lentille en plastique comprenant une lentille en poly(thio)uréthane ou une lentille en polymère de type bis(allylcarbonate) de diéthylène glycol ayant au moins un composé choisi parmi les composés de dibenzoylméthane de la formule générale (1) et les composés de benzotriazole de la formule générale (2) tels que définis dans la revendications 1 sur ou à proximité de la surface de celle-ci.

4. Lentille en plastique selon la revendication 3, ayant un indice de jaune (YI) de 0,8 - 1,2 et une transmittance UV à 385 nm de 1 - 4 % lorsqu'ils sont mesurés au centre de la lentille ayant une épaisseur de 1,8 - 2,2 mm.

5. Utilisation d'une lentille en plastique selon l'une quelconque des revendications 3 à 4 pour la production de verres de lunettes absorbant la lumière ultraviolette.
